**Europäisches Patentamt**

**European Patent Office**

**Office européen des brevets**

(11) Veröffentlichungsnummer: **0 150 372**
**A1**

(12) # EUROPÄISCHE PATENTANMELDUNG

(21) Anmeldenummer: **84115094.9**

(22) Anmeldetag: **10.12.84**

(51) Int. Cl.⁴: **G 11 B 5/127**

(30) Priorität: **23.12.83 DE 3346886**

(43) Veröffentlichungstag der Anmeldung: **07.08.85**
**Patentblatt 85/32**

(84) Benannte Vertragsstaaten: **DE FR GB IT**

(71) Anmelder: **Siemens Aktiengesellschaft, Berlin und München Wittelsbacherplatz 2, D-8000 München 2 (DE)**

(72) Erfinder: **Bartsch, Wolfgang, Rennestrasse 21, D-8520 Erlangen (DE)**

(54) **Kombinierter Schreib- und Lese-Magnetkopf für ein longitudinal oder senkrecht zu magnetisierendes Aufzeichnungsmedium.**

(57) Mit dem kombinierten Schreib- und Lese-Magnetkopf (2) werden längs einer Spur Informationen durch entsprechende Magnetisierung der Speicherschicht (4) eines Aufzeichnungsmediums eingeschrieben. Der Magnetkopf (2) weist zwei Polschenkel (6, 7) auf, die in Bewegungsrichtung des Kopfes hintereinander und mit vorbestimmtem Abstand (W) zueinander angeordnet sind und denen mindestens eine Spulenwicklung (16) zugeordnet ist, deren Windungen sich durch den zwischen den Polschenkeln ausgebildeten Zwischenraum erstrecken. Mit diesem Magnetkopf (2) soll die Schreib- und Lesefunktion sowohl gemäß dem Prinzip der longitudinalen als auch gemäß dem Prinzip der senkrechten Magnetisierung auszuüben sein.

Die beiden Polschenkel (6, 7) sind zumindest teilweise von einer zusätzlichen Spulenwicklung (17) umschlossen, mit der für die Schreibfunktion nach dem Prinzip der senkrechten Magnetisierung bei Stromlosigkeit der anderen Spulenwicklung (16) in den beiden Polschenkeln (6, 7) Flußführungsrichtungen (19, 20) hervorzurufen sind, die zumindest an den dem Aufzeichnungsmedium (M) zugewandten Enden (8, 9) der Polschenkel (6, 7) parallel verlaufen.

0150372

SIEMENS AKTIENGESELLSCHAFT       Unser Zeichen
Berlin und München               VPA 83 P 3436 E

Kombinierter Schreib- und Lese-Magnetkopf für ein
longitudinal oder senkrecht zu magnetisierendes
Aufzeichnungsmedium

Die Erfindung bezieht sich auf einen kombinierten Schreib-
und Lese-Magnetkopf für ein Aufzeichnungsmedium, das mit
mindestens einer magnetisierbaren Speicherschicht versehen ist, in welche längs einer Spur Informationen
durch longitudinale (horizontale) oder insbesondere
durch senkrechte (vertikale) Magnetisierung der Speicherschicht einzuschreiben sind, welcher Magnetkopf einen den magnetischen Fluß führenden Leitkörper mit zwei
Polschenkeln aufweist, die in Bewegungsrichtung des
Kopfes hintereinander und mit vorbestimmtem Abstand
zueinander angeordnet sind und denen mindestens eine
Spulenwicklung zugeordnet ist, deren Windungen sich
durch den zwischen den Polschenkeln ausgebildeten Zwischenraum erstrecken. Ein solcher Magnetkopf für das
Prinzip der senkrechten Magnetisierung geht aus der
DE-OS 29 24 013 hervor.

Dieses Prinzip der senkrechten Magnetisierung zur Speicherung von Informationen ist allgemein bekannt (vergleiche z. B. "IEEE Transactions on Magnetics", vol.
MAG-16, no. 1, Jan. 1980, Seiten 71 bis 76 oder die
genannte DE-OS). Für dieses Prinzip, das vielfach auch
als vertikale Magnetisierung bezeichnet wird, sind besondere Aufzeichnungsmedien in Form von starren Magnetspeicherplatten, flexiblen Einzelplatten (Floppy Discs)
oder Magnetbändern erforderlich. Ein entsprechendes Aufzeichnungsmedium weist mindestens eine magnetisierbare
Speicherschicht vorbestimmter Dicke auf, welche ein magnetisch anisotropes Material, insbesondere aus einer
CoCr-Legierung, enthält. Dabei ist die Achse der soge-

Slm 2 Sir / 21.12.1983

nannten leichten Magnetisierung dieser Schicht senkrecht zur Oberfläche des Mediums gerichtet. Mittels eines Magnetkopfes werden dann längs einer Spur die einzelnen Informationen in aufeinanderfolgenden Abschnitten, auch Zellen oder Blöcke genannt, durch Magnetisierung der Speicherschicht eingeschrieben. In der Praxis werden im allgemeinen die magnetischen Flußwechsel, d. h. die Übergänge von einer Magnetisierungsrichtung zur entgegengesetzten, als Informationen benutzt. Die Abschnitte haben dabei eine vorbestimmte, auch als Wellenlänge bezeichnete Ausdehnung in Längsrichtung der Spur. Diese Ausdehnung kann im Vergleich zu der Grenze, die bei dem Verfahren der longitudinalen (horizontalen) Speicherung durch die Entmagnetisierung gegeben ist, wesentlich kleiner sein, so daß sich nach dem Prinzip der senkrechten Magnetisierung die Informationsdichte in dem Aufzeichnungsmedium vorteilhaft vergrößern läßt.

Die für das Prinzip der longitudinalen Magnetisierung bekannten kombinierten Schreib- und Lese-Köpfe, d. h. Köpfe, mit denen sowohl die Schreib- als auch die Lese-Funktion auszuüben ist, können jedoch nicht ohne weiteres auch für eine senkrechte Magnetisierung verwendet werden. Bei Verwendung dieser Köpfe, die im allgemeinen ringähnliche Gestalt haben, läßt sich zwar die allgemein auch bei dem Prinzip der senkrechten Magnetisierung angestrebte Flußführung zu einem möglichst geschlossenen Kreis mit geringem magnetischen Widerstand erreichen. Jedoch ist ein Schreiben beider Pole dieser Ringköpfe kaum zu unterdrücken, so daß sich entsprechende Schwierigkeiten beim Lesen der eingeschriebenen Informationen ergeben.

Man sieht sich deshalb gezwungen, für das Prinzip der senkrechten Magnetisierung spezielle kombinierte Schreib-/ Lese-Köpfe zu entwickeln. Ein hierfür geeigneter Magnetkopf weist im allgemeinen einen sogenannten Hauptpol auf, mit dem ein hinreichend starkes senkrechtes Magnetfeld zum Ummagnetisieren der einzelnen Abschnitte in der Speicherschicht erzeugt wird. Der notwendige magnetische Rückschluß kann dann z. B. durch einen sogenannten Hilfspol auf der gegenüberliegenden Seite des Aufzeichnungsmediums erfolgen (vergleiche die genannte Literaturstelle "IEEE Trans. Magn.", vol. MAG-16). Daneben ist auch der Rückschluß durch den Streufluß bekannt ("IEEE Trans. Magn.", vol. MAG-18, no. 6, Nov. 1982, Seiten 1170 bis 1172). Ferner läßt sich ein magnetischer Rückschluß auch mit einem besonderen Hilfspol vornehmen, der sich auf derselben Seite wie der Hauptpol befindet (vgl. "IEEE Trans. Magn.", vol. MAG-17, no. 6, Nov. 1981, Seiten 3120 bis 3122 oder vol. MAG-18, no. 6, Nov. 1982, Seiten 1158 bis 1163 oder die genannte DE-OS). Dementsprechend enthält der aus der DE-OS bekannte Schreib- und Lese-Magnetkopf in Bewegungsrichtung des unter ihm hinwegbewegten Aufzeichnungsmediums gesehen auf seiner vorderen Stirnseite den Hilfspol und auf seiner rückwärtigen Seite den eigentlichen Hauptpol. Dieser Hauptpol wird von einem Polschenkel gebildet, der im wesentlichen aus z. B. einem dünnen, senkrecht zur Bewegungsrichtung verlaufenden Polstück besteht, das auf einem nicht-magnetischen Substrat aufgebracht ist. Den in Bewegungsrichtung ausgedehnteren Hilfspol, der vor dem Hauptpol liegt, bildet ein Polschenkel, der sich aus mehreren senkrecht zur Bewegungsrichtung angeordneten Polstücken mit dazwischenliegenden Isolationsschichten zusammensetzt. Zwischen diesem somit eine vergleichsweise wesentlich größere Fläche der Spur überdeckenden Hilfspol und dem Hauptpol ist ein als Luftspalt bezeichneter Zwischenraum von einigen μm Breite ausgebildet. In diesem Luftspalt liegt eine elektrische Wicklung, mit der für die Schreibfunktion der Hauptpol erregt bzw. für die Lesefunktion die Erregung des Hauptpoles registriert werden kann. Der Hilfspol soll dabei in jedem Falle lediglich nur zur magnetischen Flußrückführung dienen. Ein eventuelles Mitschreiben des Hilfspols kann in Kauf genommen werden, da ihm der schreibende Hauptpol stets nacheilt und somit vom Hilfspol eventuell geschriebene Informationen überschreibt. Voraussetzung dafür ist jedoch, daß die Breite des Hilfspoles nicht größer als die des Hauptpoles ist und somit bereits beschriebene Nachbarspuren unbeeinflußt bleiben. Bei diesem Magnetkopf ist außer dem größeren Querschnitt des Hilfspols im Vergleich zum Hauptpol auch eine verhältnismäßig große Breite des Luftspaltes zu fordern, um so eine weitgehende Reduzierung der magnetischen Flußdichte am Hilfspol gewährleisten zu können. Dennoch läßt sich bei dem bekannten Magnetkopf sein Luftspalt nicht so breit ausbilden, daß ein Mitlesen des Hilfspols mit seiner ablaufenden Kante völlig zu unterbinden ist. Hieraus können sich Schwierigkeiten bei der Informationserkennung ergeben.

Auf Grund der sich bei dem Prinzip der senkrechten Magnetisierung ergebenden Schwierigkeiten beim Lesen mit den bekannten kombinierten Schreib- und Lese-Köpfen ist vorgeschlagen worden, die Funktion des Schreibens und des Lesens auch mit getrennten Köpfen auszuüben, um so diese Köpfe an die jeweilige Funktion optimal anpassen zu können (vgl. z. B. "IEEE Trans. Magn.", vol. MAG-16, no. 5, Sept. 1980, Seiten 967 bis 972). Für das Lesen lassen sich die von dem Prinzip der longitudinalen Magnetisierung an sich bekannten Ringköpfe verwenden, während das Schreiben mit speziellen Köpfen durchzuführen ist. Ein solcher auch als Einzel-Pol-Kopf bezeichneter Schreibkopf weist z. B. auf seiner der Speicherschicht des Aufzeichnungsmediums zugewandten Seite einen einzigen Pol als Hauptpol mit longitudinaler Ausdehnung von z. B. 3 µm auf, dem auf der Rückseite des Aufzeichnungsmediums ein wesentlich ausgedehnterer Hilfspol gegenüber liegt. Der zweite, nur zum Lesen benötigte Kopf ist ein bekannter Ringkopf und hat eine Spaltweite von z. B. 0,2 µm (vgl. "IEEE Trans. Magn.", vol. MAG-17, no. 6, Nov. 1981, Seiten 2538 bis 2540). Entsprechende Einrichtungen zum Lesen und Schreiben mit an die jeweilige Funktion angepaßten besonderen Köpfen sind jedoch konstruktiv verhältnismäßig aufwendig.

Aufgabe der vorliegenden Erfindung ist es deshalb, den eingangs genannten kombinierten Schreib- und Lese-Magnetkopf dahingehend zu verbessern, daß mit ihm eine schaltbare Schreib- und Lesefunktion mit jeweils verhältnismäßig hohem Wirkungsgrad sowohl nach dem Prinzip der longitudinalen Magnetisierung als auch insbesondere nach dem Prinzip der senkrechten Magnetisierung ermöglicht ist.

Diese Aufgabe wird erfindungsgemäß dadurch gelöst, daß die beiden Polschenkel zumindest teilweise von einer zusätzlichen Spulenwicklung umschlossen sind, mit der für die Schreibfunktion nach dem Prinzip der senkrechten Magnetisierung bei Stromlosigkeit der anderen Spulenwicklung in den beiden Polschenkeln Flußführungsrichtungen hervorzurufen sind, die zumindest an den dem Aufzeichnungsmedium zugewandten Enden der Polschenkel parallel verlaufen.

Die mit dieser Ausgestaltung des Magnetkopfes verbundenen Vorteile sind insbesondere darin zu sehen, daß beim Schreiben nach dem Prinzip der senkrechten Magnetisierung mittels der zusätzlichen, als Schreibspule dienenden Spulenwicklung einheitliche Magnetisierungsrichtungen in den beiden Polschenkeln eingestellt werden, deren an den Polenden austretende Magnetfelder sich hinsichtlich ihrer senkrechten Komponenten gegenseitig verstärken. Der Magnetkopf schreibt dann vorteilhaft quasi als Einzel-Pol-Kopf die Informationen in das Aufzeichnungsmedium. Die andere, als Lesespule dienende Spulenwicklung bleibt dabei stromlos. Ihr sich durch den Zwischenraum zwischen den beiden Polschenkeln erstreckender Wicklungsteil befindet sich dabei vorteilhaft in einem feldfreien Raum. Zum Lesen mit dem Magnetkopf gemäß dem Prinzip der senkrechten Magnetisierung bleibt die zusätzliche Spulenwicklung außer Funktion. Die beiden Polschenkel des Magnetkopfes sind dann quasi zu einem Ringkopf magnetisch hintereinander geschaltet. Mit dieser Ausbildung als Ringkopf ist somit vorteilhaft auch die Verwendung des erfindungsgemäßen Magnetkopfes nach dem Prinzip der longitudinalen Magnetisierung sowohl zum Schreiben als auch zum Lesen möglich.

Vorteilhafte Ausgestaltungen des Magnetkopfes nach der Erfindung gehen aus den Unteransprüchen hervor.

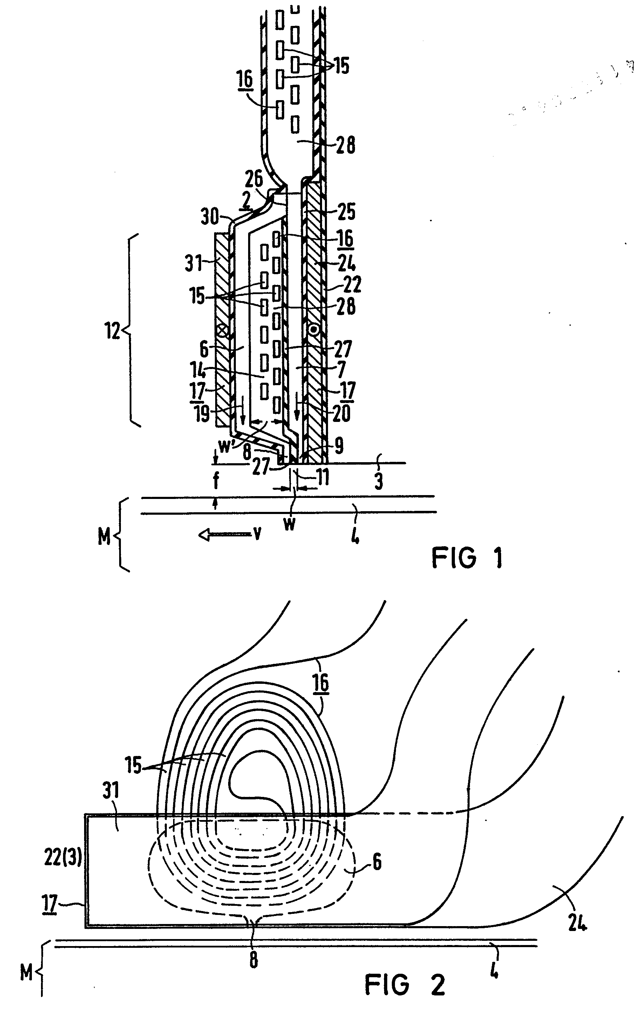

Zur weiteren Erläuterung der Erfindung wird auf die schematische Zeichnung Bezug genommen, in deren Figuren 1 und 2 ein Längsschnitt bzw. eine Seitenansicht auf einen erfindungsgemäßen Magnetkopf veranschaulicht sind.

Bei dem in Fig. 1 gezeigten kombinierten Schreib- und Lese-Magnetkopf nach der Erfindung wird von an sich bekannten ringkopfähnlichen Ausführungsformen ausgegangen. Der in der Figur allgemein mit 2 bezeichnete Kopf, der z. B. während seiner Schreibfunktion gemäß dem Prinzip der senkrechten (vertikalen) Magnetisierung gezeigt sein soll, befindet sich auf einer Flachseite eines Substratkörpers 3, der z. B. die Stirnseite oder die Rückseite eines gebräuchlichen, als Flugkörper bezeichneten Elementes bildet und in der Figur nur als Teil angedeutet ist. Dieser Kopf ist relativ zu einem an sich bekannten, vertikal zu magnetisierenden Aufzeichnungsmedium M in geringer Flughöhe f von beispielsweise 0,2 µm über einer Speicherschicht 4 dieses Mediums längs einer Spur zu führen. Z. B. wird das Aufzeichnungsmedium unter dem Kopf hinweggeführt. Die relative Bewegungsrichtung des Magnetkopfes 2 bezüglich des Aufzeichnungsmediums M ist durch eine mit v bezeichnete gepfeilte Linie angedeutet.

Der Magnetkopf 2 weist zwei Polschenkel 6 und 7 auf, die weitgehend und insbesondere an ihren dem Aufzeichnungsmedium M zugewandten Enden 8 bzw. 9 zumindest annähernd senkrecht zur Oberfläche des Aufzeichnungsmediums ausgerichtet sind. Zwischen diesen beiden Polschenkelenden ist ein Luftspalt 11 mit einer vorteilhaft geringen longitudinalen, d. h. in Bewegungsrichtung v weisenden Weite w von unter 1 µm, insbesondere unter 0,3 µm ausgebildet. In einem mittleren Bereich 12 des Magnetkopfes 2 ist der Abstand zwischen den beiden Polschenkeln 6 und 7 gegenüber der Spaltweite w erweitert, in dem z. B. der hinsichtlich der Bewegungsrichtung rückwärtige Polschenkel 6 in diesem Bereich auf einen größeren Abstand w' bezüglich des vorderen, gerade ausgebildeten Polschenkels 7 führt. Außerhalb dieses Bereiches auf der dem Aufzeichnungsmedium M abgewandten Seite sind die Polschenkel 6 und 7 in bekannter Weise wieder zusammengeführt. Die beiden Polschenkel bilden somit einen den magnetischen Fluß führenden Leitkörper 13 mit ringkopfähnlicher Gestalt. Durch den zwischen den beiden Polschenkeln 6 und 7 in dem mittleren Bereich 12 ausgebildeten Zwischenraum 14 erstrecken sich die Windungen 15 einer mehrlagigen, insbesondere zweilagigen, flachen Spulenwicklung 16, die als Lesespule nach dem Prinzip der senkrechten Magnetisierung dienen soll. Sie bleibt jedoch für die in der Figur angenommene Schreibfunktion stromlos.

Für diese Schreibfunktion ist gemäß der Erfindung eine zusätzliche Spulenwicklung 17 vorgesehen, welche die beiden Polschenkel 6 und 7 zumindest teilweise, z. B. in deren Bereich 12 umschließt. Diese zusätzliche Spulenwicklung 17 wird z. B. von einer einzigen breiten Spulenschleife oder auch von mehreren Windungen gebildet. Bei einem vorhandenen, durch die eingezeichneten Stromflußrichtungssymbole veranschaulichten Schreibstrom werden dann in den beiden Polschenkeln 6 und 7 die durch gepfeilte Linien 19 und 20 angedeuteten Führungsrichtungen des magnetischen Flusses ausgebildet, die zumindest weitgehend parallel verlaufen und beispielsweise auf das Medium M hin ausgerichtet sind. Die beiden Polschenkel 6 und 7 des ringkopfähnlichen Magnetkopfes 2 sind also wie ein Stabmagnet gepolt, d. h., der erfindungsgemäße Magnetkopf 2 wirkt dann quasi wie ein Einzel-Pol-Kopf. Außer bei dieser Schreibfunktion bleibt jedoch die Spulenwicklung 17 stromlos, so daß dann der Magnetkopf 2 mit der Spulenwicklung 16 als gewöhnlicher Ringkopf betrieben wird.

Bei der Herstellung des Magnetkopfes 2 in Dünnschicht-Technik wird im allgemeinen ein Flugkörper mit einem Substrat verwendet, das z. B. aus TiC und $Al_2O_3$ besteht. Falls erforderlich, kann der entsprechende Substratkörper 3 noch mit einer hinreichend, beispielsweise 15 µm dicken Isolationsschicht 22 z. B. aus $Al_2O_3$ versehen werden. Zum Aufbau der Polschenkel 6 und 7 werden beispielsweise 1 µm dünne Magnetschichten aus speziellen NiFe-Legierungen wie Permalloy (Ni/Fe-81/19) oder aus FeB durch Sputtern, Aufdampfen oder galvanische Abscheidung aufgebracht und jeweils durch eine nicht-magnetische Zwischenlage z. B. aus $SiO_2$ oder $Al_2O_3$ mit einer Dicke von 0,1 bis 0,2 µm voneinander getrennt. Die Magnetisierung dieser Magnetschichten liegt dabei in der Schichtebene. Durch den Herstellungsprozeß bedingt weisen die Magnetschichten eine uniaxiale Anisotropie auf, d. h., daß jede Magnetschicht zwei um 90° gedrehte Anisotropieachsen hat, die als leichte bzw. schwere Richtung bezeichnet werden. Die Magnetisierung liegt bevorzugt parallel oder antiparallel zu leichten Richtung. Die leichte Richtung der Magnetisierung kann z. B. beim Aufbringen der jeweiligen Schicht durch ein angelegtes Magnetfeld induziert werden. Sie liegt im allgemeinen immer senkrecht zur Richtung des magnetischen Flusses in den Polschenkeln 6 und 7, d. h. im Bereich deren Enden 8 und 9 im wesentlichen parallel zur Oberfläche des Aufzeichnungsmediums M. Die aufgewachsenen, unterschiedlichen Schichten werden durch an sich bekannte Techniken wie Photolithographie, Plasma-, Ionenstrahl- oder naßchemisches Ätzen strukturiert und damit die beiden Polschenkel des Magnetkopfes hergestellt.

Zum Aufbau des Magnetkopfes 2 wird zunächst auf dem Substratkörper 3 bzw. auf dessen Isolationsschicht 22 ein innerer (unterer) Teil der zusätzlichen, als Schreibspule dienenden Spulenwicklung 17 ausgebildet, indem eine z. B. 2,5 µm dicke Schicht aus Cu oder Au oder Al abgeschieden und entsprechend strukturiert wird. Al als Schreibspulenmaterial ist besonders vorteilhaft, da es leicht zu $Al_2O_3$ oxidierbar ist, um gegebenenfalls Kontakte zur metallischen Speicherschicht zu verhindern. Auf den Wicklungsteil 24 der Wicklung 17 wird dann eine weitere Isolationsschicht 25 von beispielsweise 0,5 bis 2,0 µm Dicke aufgebracht, bevor die Schichten des ersten Polschenkels erstellt und bis auf eine Verbindungsstelle 26 mit dem zweiten Polschenkel 6 mit einer Isolations- und Spaltschicht 27 überzogen werden. Diese Spaltschicht 27 besteht vorteilhaft aus einem harten Material wie z. B. $Al_2O_3$ und kann etwa 0,3 µm dick sein.

Nach Fertigstellung des ersten Polstückes 7 mit einer longitudinalen Ausdehnung an seinem Ende 9 von beispielsweise 0,5 bis 1 µm werden die einzelnen Windungen 15 der als Lesespule dienenden Wicklung 16 ebenfalls in Dünnschichttechnik hergestellt und strukturiert. Die z. B. aus Cu, Au oder Al bestehenden, beispielsweise 0,7 bis 2,5 µm dicken Windungen dieser zweilagig angenommenen Wicklung sind in ein Einebnungsmaterial, beispielsweise in einen Polyimid-Lack eingebettet. Die entsprechenden Einebnungsschichten sind in Fig. 1 allgemein mit 28 bezeichnet.

Daran anschließend erfolgt das Aufbringen und Strukturieren des zweiten lamellierten Polschenkels 6. Seine Magnetschichten sind im Bereich des Spaltes 11 nur über die Spaltschicht 27 und in dem mittleren Bereich 12 zusätzlich über die Einebnungsschichten 28 mit den eingelagerten Windungen 15 der Spulenwicklung 16 von dem Polschenkel 7 getrennt. Im Bereich der Verbindungsstelle 26 sind beide Polschenkel 6 und 7 aneinandergefügt, so daß eine ringkopfähnliche Gestalt des Magentkopfes erreicht wird.

Zumindest dieser Polschenkel 6 wird anschließend mit einer weiteren Isolationsschicht 30 von geringer Dicke, beispielsweise zwischen 0,5 bis 2 µm versehen, bevor der äußere (obere) Teil 31 der zusätzlichen Spulenwicklung 17 ausgebildet, strukturiert und mit dem inneren (unteren) Teil 24 zu einer Wicklungsschleife verbunden wird.

Zuletzt wird zum Schutz des so hergestellten Dünnschicht-Magnetkopfes 2 noch eine verhältnismäßig dicke Protektionsschicht z. B. aus $Al_2O_3$ aufgebracht, auf deren Darstellung in der Figur jedoch verzichtet wurde.

Die Dicken der Isolationsschicht 30 und dieser Protektionsschicht sowie des Polschenkels 6 und des Wicklungsteils 31 können hierbei z. B. etwa die Werte der entsprechenden Magnetkopfteile 25 bzw. 7 bzw. 24 haben.

Von dem in Fig. 1 als Längsschnitt schematisch gezeigten Magnetkopf 2 nach der Erfindung ist in Fig. 2 ein Teil schematisch als Seitenansicht wiedergegeben, wobei in den Figuren übereinstimmende Teile mit den gleichen Bezugszeichen versehen sind. Überdeckte Teile sind in Fig. 2 durch gestrichelte Linien angedeutet. Aus Gründen der Übersichtlichkeit wurde nur eine Lage aus Windungen 15 der Spulenwicklung 16 ausgeführt und auf eine Darstellung der verschiedenen Isolationsschichten verzichtet. Aus dieser Figur gehen insbesondere die die Polschenkel 6 und 7 praktisch vollständig umschließenden Teile 24 und 31 der als Schreibspule dienenden zusätzlichen Spulenwicklung 17 hervor. Statt der angenommen einzigen Schleife dieser Wicklung können selbstverständlich auch mehrere Windungen vorgesehen werden.

Gemäß der Darstellung nach Fig. 1 wurde eine Schreibfunktion nach dem Prinzip der senkrechten Magnetisierung auf Grund einer angedeuteten Erregung der Schreibspule 17 bei gleichzeitiger Stromlosigkeit der Spulenwicklung 16 angenommen. Die zusätzliche Spulenwicklung 17 bleibt bei allen übrigen Funktionen, so beim Lesen gemäß dem Prinzip der senkrechten Magnetisierung wie auch beim Schreiben und Lesen nach dem Prinzip der longitudinalen Magnetisierung außer Funktion. Vorteilhaft kann dann der Magnetkopf 2 praktisch wie ein an sich bekannter Ringkopf betrieben werden.

9 Patentansprüche
2 Figuren

Patentansprüche

1. Kombinierter Schreib- und Lese-Magnetkopf für ein
Aufzeichnungsmedium, das mit mindestens einer magnetisierbaren Speicherschicht versehen ist, in welche
längs einer Spur Informationen durch longitudinale
(horizontale) oder insbesondere durch senkrechte (vertikale) Magnetisierung der Speicherschicht einzuschreiben sind, welcher Magnetkopf einen den magnetischen Fluß führenden Leitkörper mit zwei Polschenkeln
aufweist, die in Bewegungsrichtung des Kopfes hintereinander und mit vorbestimmtem Abstand zueinander angeordnet sind und denen mindestens eine Spulenwicklung zugeordnet ist, deren Windungen sich durch den
zwischen den Polschenkeln ausgebildeten Zwischenraum
erstrecken, d a d u r c h   g e k e n n z e i c h -
n e t  , daß die beiden Polschenkel (6, 7) zumindest teilweise von einer zusätzlichen Spulenwicklung
(17) umschlossen sind, mit der für die Schreibfunktion
nach dem Prinzip der senkrechten Magnetisierung bei
Stromlosigkeit der anderen Spulenwicklung (16) in den
beiden Polschenkeln (6, 7) Flußführungsrichtungen (19,
20) hervorzurufen sind, die zumindest an den dem Aufzeichnungsmedium (M) zugewandten Enden (8, 9) der Polschenkel (6, 7) parallel verlaufen.

2. Magnetkopf nach Anspruch 1, d a d u r c h   g e -
k e n n z e i c h n e t ,  daß zumindest teilweise sein
den Magnetfluß führender Leitkörper (13) als Dünnschicht-
Struktur auf einem ebenen Substratkörper (3) aufgebracht
ist.

3. Magnetkopf nach Anspruch 2, d a d u r c h   g e -
k e n n z e i c h n e t ,  daß die Spulenwicklungen (16, 17) als Dünnschicht-Strukturen zumindest teilweise auf dem Substratkörper (3) bzw. auf den Polschenkeln (6, 7) angeordnet sind.

4. Magnetkopf nach einem der Ansprüche 1 bis 3, d a d u r c h   g e k e n n z e i c h n e t , daß zumindest teilweise sein den Magnetfluß führender Leitkörper (13) aus weichmagnetischem Material besteht.

5. Magnetkopf nach einem der Ansprüche 1 bis 4, d a d u r c h   g e k e n n z e i c h n e t , daß sein den Magnetfluß führender Leitkörper (13) aus einem Material besteht, dessen leichte Magnetisierung zumindest weitgehend senkrecht zur Führungsrichtung des Magnetflusses gerichtet ist.

6. Magnetkopf nach einem der Ansprüche 1 bis 5, d a d u r c h   g e k e n n z e i c h n e t ,   daß der Abstand (w) zwischen den dem Aufzeichnungsmedium (M) zugewandten Enden (8, 9) der Polschenkel (6, 7) unter 1 µm liegt.

7. Magnetkopf nach einem der Ansprüche 1 bis 6, d a d u r c h   g e k e n n z e i c h n e t ,   daß zwischen den Polschenkeln (6, 7) ein vom Abstand (w) zwischen ihren dem Aufzeichnungsmedium (M) zugewandten Enden (8, 9) auf einen größeren Abstand (w') erweiterter Zwischenraum (14) ausgebildet ist, in dem zumindest teilweise die Windungen (15) der ersten Spulenwicklung (16) angeordnet sind.

8. Magnetwicklung nach einem der Ansprüche 1 bis 7, d a d u r c h   g e k e n n z e i c h n e t ,   daß die zusätzliche Spulenwicklung (17) eine einzige Spulenschleife mit jeweils einem, an einen Polschenkel (6 oder 7) angrenzenden, weitgehend ebenen Wicklungsteil
(24 bzw. 31) umfaßt, wobei diese Wicklungsteile (24, 31)
die jeweiligen Polschenkel (6 bzw. 7) flächenmäßig zumindest großenteils überdecken.

9. Magnetkopf nach einem der Ansprüche 1 bis 7,
d a d u r c h   g e k e n n z e i c h n e t ,  daß die
zusätzliche Spulenwicklung mehrere Windungen aufweist.

0150372

83 P 3436

1/1

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 6, Nr. 237, 25. November 1982, Seite (P-157)(1115); JP-A-57-135418 (FUJITSU) 21-08-1982. * Zusammenfassung * | 1,2 | G 11 B 5/127 |
| A | idem | 5,7,9 | |
| P,X | PATENT ABSTRACTS OF JAPAN, Band 8, Nr. 109, 22. Mai 1984, Seite (P-275) (1546); & JP-A-59-19211 (SUWA SEIKOSHA) 31-01-1984 * Zusammenfassung * | 1,2 | |
| A | idem | 9 | |
| P,A | PATENT ABSTRACTS OF JAPAN, Band 8, Nr. 109, 22. Mai 1984, Seite (P-275) (1546); &JP-A-59-19215 (SUWA SEIKOSHA) 31-01-1984 | 1 | **RECHERCHIERTE SACHGEBIETE (Int. Cl.4)**<br><br>G 11 B 5/00 |
| A | FR-A-2 428 886 (CII-HONEYWELL) & DE-A1-2 924 013 (Cat. D) | | |

---

Der vorliegende Recherchenbericht wurde für alle Patentansprüche erstellt.

| Recherchenort | Abschlußdatum der Recherche | Prüfer |
|---|---|---|
| BERLIN | 06-03-1985 | ROGNONI M.G.L. |